# EUROPÄISCHE PATENTSCHRIFT

(11) **EP 1 306 250 B1**
(45) Veröffentlichungstag und Bekanntmachung des Hinweises auf die Patenterteilung: **07.12.2005**
(21) Anmeldenummer: 02023354.0
(22) Anmeldetag: 18.10.2002
(51) Int. Cl.: B60H 3/06

(54) **Vorrichtung zum Klimatisieren eines Kraftfahrzeugs mit einem Filtergehäuse**
Air conditioning device for a vehicle comprising a filter casing
Dispositif de climatisation d'un véhicule comprenant un boîier de filtre

(30) Priorität: 23.10.2001 DE 10151618
(43) Veröffentlichungstag der Anmeldung: 02.05.2003
(73) Patentinhaber: Webasto Thermosysteme International GmbH, 82131 Stockdorf (DE)
(72) Erfinder: Habijanec Stephan, 82152 Krailing (DE); Trumler Harald, 81375 München (DE)
(74) Vertreter: Willsau, Peter

(56) Entgegenhaltungen:
- EP-A- 1 184 268
- DE-C- 19 628 111
- FR-A- 2 769 264

## Beschreibung

Die Erfindung betrifft eine Vorrichtung zum Klimatisieren eines Kraftfahrzeugs mit einer Klimaanlage, einer Frischluftzuführung, durch die die Klimaanlage mit Frischluft versorgt wird, einem Luftfilter, der zugeführte Frischluft filtert, einem Filtergehäuse zur Aufnahme des Luftfilters, einer Öffnung in dem Filtergehäuse zum Einbringen beziehungsweise Entnehmen des Luftfilters und einem abnehmbaren Deckel zum Verschließen der Öffnung in dem Filtergehäuse. Die Erfindung betrifft weiterhin ein Filtergehäuse mit einem Deckel.

Gattungsgemäße Vorrichtungen und gattungsgemäße Filtergehäuse kommen beispielsweise bei Frontklimaanlagen von Kraftfahrzeugen, insbesondere von Lastkraftwagen, zum Einsatz. Bei der Klimatisierung von LKW-Kabinen werden Frontklimaanlagen häufig unterhalb des Armaturenbrettes eingebaut. Die Klimaanlage ist im Allgemeinen mit der Kabinenstirnwand verschraubt und saugt Frischluft durch eine Öffnung in der Stirnwand an. Um die Frischluft von Verunreinigungen wie Staub oder Pollen zu reinigen, wird auf der Außenseite der Kabinenstirnwand häufig ein Luftfilter montiert. Dieser Luftfilter ist innerhalb eines Filtergehäuses angeordnet.

Zum Wechseln des Luftfilters beziehungsweise des Filtereinsatzes ist es erforderlich, das Filtergehäuse zu öffnen. Zu diesem Zweck ist ein Deckel an dem Filtergehäuse vorgesehen, der sich nach dem Lösen einer Verschraubung von dem Filtergehäuse abnehmen lässt. Nach dem Einsetzen des neuen Filtereinsatzes kann der Deckel dann wieder auf das Filtergehäuse aufgeschraubt werden.

Eine solche Wechselprozedur des Filtereinsatzes ist umständlich, da einerseits Werkzeug zum Lösen beziehungsweise Festziehen der Schrauben erforderlich ist. Weiterhin sind die Filtereinsätze bei Systemen des Standes der Technik im Allgemeinen nach unten aus dem Filtergehäuse entnehmbar, so dass der Austausch des Filtereinsatzes durch im Allgemeinen unter dem Filtergehäuse verlaufende Bauteile, beispielsweise Leitungen und Rohre, behindert wird.

FR 2 769 264 A offenbart eine Vorrichtung zum Klimatisieren eines Kraftfahrzeugs und ein Filtergehäuse nach den Oberbegriffen der Ansprüche 1 bzw. 11.

Bei Systemen des Standes der Technik sind ebenfalls Vorkehrungen getroffen, um in der Klimaanlage entstehendes Kondensat ablaufen zu lassen. Zu diesem Zweck ragt im Allgemeinen unterhalb des Filtergehäuses der Kondensatablauf der Klimaanlage durch die Stirnwand des Fahrzeugs. Zum Zwecke der Ableitung des anfallenden Kondensates ist eine Gummitülle mit Schlauch auf den Kondensatablauf aufgeschoben. Eine solche Verbindung gewährt zwar einen dichten und sicheren Ablauf des Kondensats; allerdings ist mit der Gummitülle ein zusätzliches Element neben dem Ablaufschlauch erforderlich, so dass das System sowohl bezüglich der Anzahl der beteiligten Elemente als auch der Montage aufwendig ist.

Der Erfindung liegt die Aufgabe zugrunde, die Nachteile des Standes der Technik zu beseitigen und insbesondere eine Vorrichtung zum Klimatisieren eines Kraftfahrzeugs beziehungsweise ein Filtergehäuse zur Verfügung zu stellen, so dass insbesondere der Wechsel des Filtereinsatzes erleichtert wird.

Diese Aufgabe wird durch eine Vorrichtung mit den Merkmalen des Anspruchs 1 bzw. durch ein Filtergehäuse mit den Merkmalen des Anspruchs 11 gelöst.

Vorteilhafte Ausführungsformen der Erfindung sind in den abhängigen Ansprüchen angegeben.

Der Deckel ist um eine Schwenkachse schwenkbar und, ausgehend von seiner die Öffnung verschließenden Position, während einer Schwenkbewegung beim Erreichen einer bestimmten Position abnehmbar ist. Auf diese Weise wird der Zugriff auf den Filtereinsatz innerhalb des Filtergehäuses erleichtert, da es nicht mehr erforderlich ist, zu diesem Zwecke einen Deckel abzuschrauben. Der Deckel lässt sich zunächst in bequemer Weise um eine Schwenkachse schwenken. Hierdurch wird schon ein Zugriff beziehungsweise zum Beispiel eine Prüfung des Filtereinsatzes ermöglicht. Nachfolgend lässt sich der Deckel in einfacher Weise abnehmen, sobald er eine vorbestimmte Position erreicht hat.

Erfindungsgemäβ weist der Deckel eine Lufteintrittsöffnung auf, die an einer der Schwenkachse abgewandten Seite des Deckels angeordnet ist, sowie im Bereich der Lufteintrittsöffnung Luftführungsmittel zum Führen von Luft in die Lufteintrittsöffnung die gleichzeitig als Griff zum Bedieren, insbesondere zum Öffnen beziehungsweise Schließen des Deckels dienen. Die Lufteintrittsöffnung gestattet somit der Luft, in den Lufteintrittbereich des Luftfilters einzutreten. Indem Luftführungsmittel vorgesehen sind, wird das Einströmen der Luft, insbesondere während des Fahrbetriebs des Kraftfahrzeugs, begünstigt, so dass letztlich die Funktion der Klimaanlage vorteilhaft beeinflusst wird. Die Luftführungsmittel können nach Art eines Luftspoilers ausgebildet sein, der bei geeigneter Formgebung als Griff zum Öffnen beziehungsweise Schließen des Deckels dienen kann.

Die erfindungsgemäße Vorrichtung ist in besonders vorteilhafter Weise dadurch weitergebildet, dass die Einbaulage des Luftfilters so gewählt ist, dass eine Lufteintrittsfläche im Wesentlichen vertikal angeordnet ist. Bei Systemen des Standes der Technik tritt die Luft im Allgemeinen von unten in den Luftfilter ein. Dies begrenzt aufgrund der begrenzten Bautiefe eines Fahrzeugs auch die Filterfläche und somit die Filterwirkung. Weiterhin wirkt sich die aus der Einbaulage des Filters resultierende schmale Bauweise des Filters auf den Druckverlust der Klimaanlage negativ aus. Diese Probleme werden auf der Grundlage der Ausführungsform mit im Wesentlichen vertikaler Lufteintrittsfläche beseitigt, da nun eine wesentlich größere Lufteintrittsfläche zur Verfügung gestellt werden kann. Zum einen wird so die Filterwirkung verbessert. Zum anderen ist der Druckverlust erheblich geringer.

Weiterhin ist in besonders bevorzugter Weise vorgesehen, dass der Deckel in seiner die Öffnung verschließenden Position im Wesentlichen parallel zu der Lufteintrittsfläche des Luftfilters angeordnet ist. Der Deckel deckt somit im geschlossenen Zustand den Lufteintrittsbereich des Luftfilters ab. Im aufgeklappten Zustand wird der Luftfilter praktisch vollständig freigegeben, so dass ein guter Zugriff auf den Luftfilter zur Verfügung gestellt wird.

Die Erfindung ist in besonders vorteilhafter Weise dadurch weitergebildet, dass der Deckel um zirka 90° schwenkbar ist und dass der Deckel spätestens in seiner vollständig ausgeschwenkten Position abnehmbar ist. Beispielsweise ist die Fläche des Deckels in der geschlossenen Position im Wesentlichen vertikal ausgerichtet. Verschwenkt man nun den Deckel in Richtung der Horizontalen, so ist er spätestens beim Erreichen seiner Endposition, das heißt beispielsweise der Horizontalen, abnehmbar. Es ist aber auch möglich, das Scharnier beziehungsweise die Scharniere des Deckels so zu gestalten, dass er beim Verschwenken aus der Vertikalen in die Horizontale bereits zu einem früheren Zeitpunkt abnehmbar ist.

Weiterhin ist es besonders bevorzugt, dass der Deckel mittels einer Rast- oder Schnappverbindung an dem Filtergehäuse zum Verschließen der Öffnung einrasten kann und dass die Rast- oder Schnappverbindung an der der Schwenkachse abgewandten Seite des Deckels angeordnet ist. Eine solche Rast- oder Schnappverbindung ist besonders vorteilhaft, da der Deckel in einfacher Weise geschlossen beziehungsweise geöffnet werden kann, ohne dass hierfür Werkzeug erforderlich wäre. Ebenfalls kann die Rast- oder Schnappverbindung durch die Formgebung der Luftführungsmittel am Deckel stabilisiert werden.

Die Erfindung ist weiterhin in vorteilhafter Weise dadurch weitergebildet, dass einstückig mit dem Filtergehäuse eine Kondensatablaufkammer ausgebildet ist. Eine solche Kondensatablaufkammer kann im Hinblick auf einen ungestörten Kondensatablauf optimiert werden. Die Kondensatablaufkammer kann in vorteilhafter Weise zusammen mit dem Filtergehäuse durch gängige Kunststoffverarbeitungsverfahren bereitgestellt werden.

Es ist besonders zu bevorzugen, dass Mittel zum Abführen von Kondensat aus der Kondensatablaufkammer ohne weitere Hilfsmittel mit der Kondensatablaufkammer verbindbar sind. Bei Systemen des Standes der Technik wurde üblicherweise eine Gummitülle verwendet, um einen Ablaufschlauch mit dem Kondensatablauf zu verbinden. Indem nun eine Kondensatablaufkammer zur Verfügung gestellt wird, die sogleich für die Verbindung mit Mitteln zum Abführen von Kondensat vorbereitet ist, können bei geeigneter Gestaltung der Kondensatablaufkammer letztere ohne weitere Hilfsmittel mit der Kondensatablaufkammer verbunden werden.

In diesem Zusammenhang ist es besonders vorteilhaft, dass die Mittel zum Abführen von Kondensat als Schlauch ausgebildet sind, der auf einen an der Kondensatablaufkammer angeordneten Stutzen aufsteckbar ist. Ein solcher Stutzen ist in einfacher Weise einstückig mit der Kondensatablaufkammer zu realisieren, so dass eine besonders einfache und dennoch zuverlässige Verbindung zwischen Schlauch und Kondensatablaufkammer besteht. Diese kann noch verbessert werden, indem der Sitz des Schlauchs auf dem Stutzen durch eine Schelle gesichert wird.

In einer weiteren besonders bevorzugten Ausführungsform der vorliegenden Erfindung ist vorgesehen, dass in der Kondensatablaufkammer ein Steg vorgesehen ist, der einen Strömungsbereich des Kondensats unterteilt, so dass ein Belüftungsbereich zur Verfügung gestellt wird. Auf diese Weise kann eine Überflutung der Kondensatablaufkammer vermieden werden. Das Vermeiden derartiger Überflutungen ist eine bekannte Aufgabe im Zusammenhang mit dem Ablauf von Kondensat. Beispielsweise wurde bereits vorgeschlagen, den Querschnitt des Kondensatablaufs zu vergrößern oder Abrisskanten zur Verfügung zu stellen, die eine Verwirbelung des Kondensats bewirken und somit eine Beschleunigung des Kondensatablaufs herbeiführen. All diese Lösungen führen jedoch nicht zu zufriedenstellenden Ergebnissen, während auf der Grundlage der vorliegenden Erfindung jedoch ein besonders zuverlässiger Kondensatablauf durch das Bereitstellen einfacher Mittel, nämlich eines Steges in der Kondensatablaufkammer, zur Verfügung gestellt wird.

Die Erfindung ist auch in der Weise besonders vorteilhaft weitergebildet, dass das Filtergehäuse an dem Kraftfahrzeug mit einer ersten Dichtung abgedichtet ist, dass die Kondensatablaufkammer an dem Kraftfahrzeug mit einer zweiten Dichtung abgedichtet ist und dass die erste Dichtung und die zweite Dichtung einstükkig ausgebildet sind. Eine Dichtung zur Abdichtung des Filtergehäuses ist auch bei Systemen des Standes der Technik vorhanden. Es ist besonders vorteilhaft, diese Dichtung in einer Weise zu modifizieren, dass sie auch in der Lage ist, die Kondensatablaufkammer abzudichten. Es ist erforderlich sowohl luft- als auch flüssigkeitsdichte Dichtungen zu verwenden, so dass die Dichtung die genannte doppelte Aufgabe erfüllen kann.

Die Erfindung besteht weiterhin in einem Filtergehäuse mit Deckel zu Verwendung in einer erfindungsgemäßen Vorrichtung, mit den Merkmalen des Anspruchs 11.

Durch die Bereitstellung eines schwenkbaren Deckels wird ein erheblich erleichterter Zugriff auf den Luftfiltereinsatz einer LKW-Klimaanlage ermöglicht. Eine stehende Anordnung des Filtereinsatzes ermöglicht ferner den Einsatz eines deutlich größeren Filtereinsatzes und somit die Reduzierung des Druckverlustes der Klimaanlage. Weiterhin ist es besonders vorteilhaft, die Kontaktierung des Kondensatablaufs und des Schlauches zur Kondensatabführung in das Filtergehäuse als Kondensatablaufkammer zu integrieren, da auf diese Weise der Einsatz einer speziellen Gummitülle entbehrlich ist. In einer besonders bevorzugten Ausführungsform ist vorgesehen, den Schlauch durch Zweiteilung der Bohrung des Ablaufstutzens mit einer Belüftung zu versehen, so dass selbst bei schwallartigem Anfall von Kondensat die Bohrung nicht überflutet wird. Es wird stets ein gleichmäßiger Kondensatablauf gewährleistet.

Die Erfindung wird nun mit Bezug auf die begleitenden Zeichnungen anhand bevorzugter Ausführungsformen beispielhaft erläutert. Es zeigt:
- Figur 1: eine Schnittansicht einer Vorrichtung des Standes der Technik;
- Figur 2: eine Schnittansicht einer erfindungsgemäßen Vorrichtung;
- Figur 3a: eine Schnittansicht eines erfindungsgemäßen Filtergehäuses mit hochgeklapptem Deckel; und
- Figur 3b: eine Schnittansicht eines erfindungsgemäßen Filtergehäuses mit geschlossenem Deckel.

Bei der nachfolgenden Beschreibung der Zeichnungen bezeichnen gleiche Bezugszeichen gleiche oder vergleichbare Komponenten.

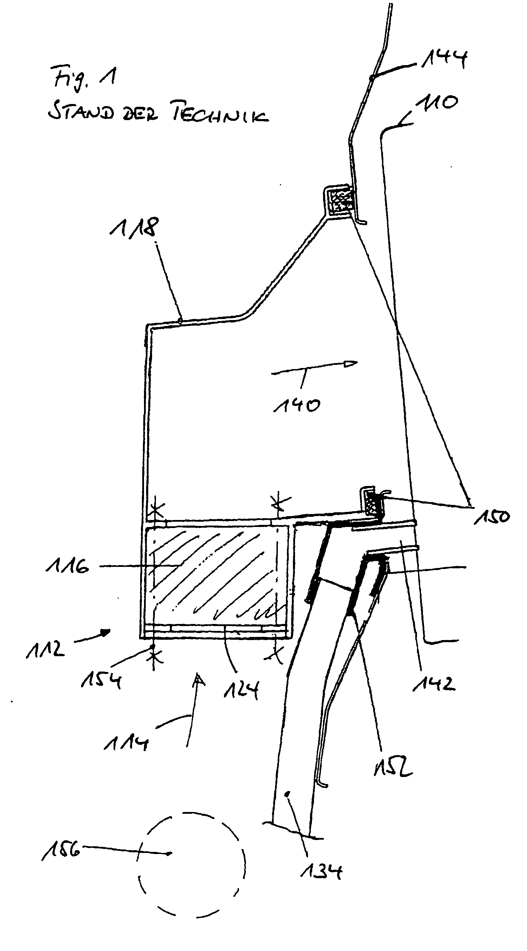

Figur 1 zeigt eine Schnittansicht einer Vorrichtung des Standes der Technik. Es ist ein Teil einer Klimaanlage 110 schematisch dargestellt, die als Frontklimaanlage unterhalb des Armaturenbrettes eines Lastkraftwagens für die Klimatisierung einer LKW-Kabine eingebaut ist. Die Klimaanlage 110 ist mit der LKW-Stirnwand 144 verschraubt. Es ist eine Frischluftzuführung 112 vorgesehen, durch welche der Klimaanlage 110 Frischluft 114 zugeführt wird. Ein wesentlicher Bestandteil der Frischluftzuführung 112 ist ein Filtergehäuse 118, in dem ein Filtereinsatz 116 angeordnet ist. Der Filtereinsatz 116 hat eine Lufteintrittsfläche 124, durch die Luft 114 in den Filtereinsatz 116 eintreten kann. Die Luft wird in dem Filtereinsatz 116 gefiltert und tritt dann als gefilterte Luft 140 in die Klimaanlage 110 ein. Das Filtergehäuse 118 ist mittels einer Dichtung 150 nach außen abgedichtet.

In der Klimaanlage 110 anfallendes Kondensat tritt durch einen Kondensatablauf 142 aus der Klimaanlage 110 aus. Zur Aufnahme und Abführung des Kondensats ist ein Schlauch 134 mittels einer Gummitülle 152 an dem Kondensatablauf 142 angeschlossen. Es lässt sich auf diese Weise ein zuverlässiger und dichter Anschluss realisieren, für den jedoch mit der Gummitülle 152 ein diesem speziellen Zweck gewidmetes Bauteil erforderlich ist. Dies ist als Nachteil zu verzeichnen.

Bei der Vorrichtung des Standes der Technik gemäß Figur 1 besteht ein weiterer Nachteil in der Anordnung des Filtereinsatzes 116. Der Filtereinsatz 116 ist liegend angeordnet, wobei die Lufteintrittsfläche horizontal positioniert ist. Das Filtergehäuse 118 ist, um einen Zugriff auf den Filtereinsatz 116 zu gestatten, durch einen (nicht dargestellten) Deckel abgeschlossen, der mittels Schraubverbindungen 154 an dem Filtergehäuse 118 angebracht ist. Weiterhin muss der Filtereinsatz 116 bei der Vorrichtung des Standes der Technik nach unten entnommen werden, wobei dies durch weitere Komponenten 156, die sich unterhalb des Filtergehäuses 118 befinden, beispielsweise Rohre oder Leitungen, behindert werden kann.

Die geschilderten Probleme werden auf der Grundlage von nachfolgend beschriebenen erfindungsgemäßen Vorrichtungen behoben.

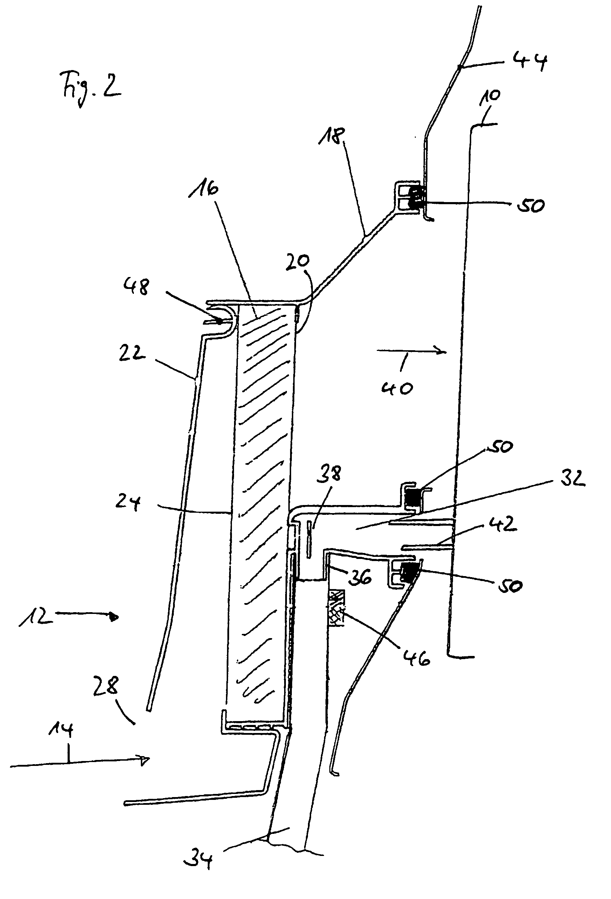

Figur 2 zeigt eine Schnittansicht einer erfindungsgemäßen Vorrichtung. Es ist ein Teil einer Klimaanlage 10 schematisch dargestellt, die als Frontklimaanlage unterhalb des Armaturenbrettes eines Lastkraftwagens für die Klimatisierung einer LKW-Kabine eingebaut ist. Die Klimaanlage 10 ist mit der LKW-Stirnwand 44 verschraubt. Es ist eine Frischluftzuführung 12 vorgesehen, durch welche der Klimaanlage 10 Frischluft 14 zugeführt wird. Ein wesentlicher Bestandteil der Frischluftzuführung 12 ist ein Filtergehäuse 18, in dem ein Filtereinsatz 16 angeordnet ist. Der Filtereinsatz 16 hat eine Lufteintrittsfläche 24, durch die Luft 14 in den Filtereinsatz 16 eintreten kann. Die Luft wird in dem Filtereinsatz 16 gefiltert und tritt dann als gefilterte Luft 40 in die Klimaanlage 10 ein. Das Filtergehäuse 18 ist mittels einer Dichtung 50 nach außen abgedichtet.

In der Klimaanlage 10 anfallendes Kondensat tritt durch einen Kondensatablauf 42 aus der Klimaanlage 10 aus.

Bei der erfindungsgemäßen Anordnung ist eine Kondensatablaufkammer 32 vorgesehen, die einstückig mit dem Filtergehäuse 18 ausgebildet ist. In diese Kondensatablaufkammer 32 tritt aus der Klimaanlage 10 austretendes Kondensat ein. Die Kondensatablaufkammer 32 ist mit einem Stutzen 36 ausgestattet, auf den ohne Weiteres ein Schlauch 34 aufgesteckt werden kann, wie es vorliegend dargestellt ist. Der Schlauch 34 kann durch eine Halteschelle 46 noch weiter gesichert werden. Auf diese Weise liegt ein unkomplizierter Anschluss des Schlauchs 34 zum Zwecke der Kondensataufnahme vor, die insbesondere ohne weitere Hilfsmittel bereitgestellt werden kann, beispielsweise ohne eine Gummitülle (152, Figur 1), wie es vorliegend im Zusammenhang mit dem Stand der Technik beschrieben wurde.

Die Kondensatablaufkammer 32 weist eine weitere bemerkenswerte Besonderheit auf, nämlich einen in der Kondensatablaufkammer 32 angeordneten Steg 38. Auf diese Weise gelingt eine Belüftung des Kondensatablaufs, so dass auch bei großen Kondensatmengen ein Ablauf erfolgen kann, selbst bei einem schwallartigen Anfall von Kondensat.

Mit der erfindungsgemäßen Vorrichtung gemäß Figur 2 wird eine komfortable Möglichkeit geschaffen, auf den Filtereinsatz 16 im Filtergehäuse 18 zuzugreifen. Die Öffnung 20 im Filtergehäuse 18 wird von einem aufrecht angeordneten Filtereinsatz 16 abgedeckt. Auf diese Weise steht bereits eine erheblich größere Lufteintrittsfläche 24 in den Filter zur Verfügung als bei der beschriebenen Lösung des Standes der Technik. Dies hat insbesondere Vorteile im Hinblick auf einen verringerten Druckverlust aufgrund der Filterung.

Der Filtereinsatz 16 wird von einem Deckel 22 bedeckt, der um eine Schwenkachse 48 in der Nähe des oberen Endbereiches der Filtereinsatzes 16 angeordnet ist. Der Deckel 22 hat im unteren Bereich eine Lufteintrittsöffnung 28, in die Frischluft 14 einströmen kann.

Als weitere Besonderheit der erfindungsgemäßen Vorrichtung ist zu nennen, dass eine Dichtung 50 vorgesehen ist, die vorzugsweise aus einem Stück geformt ist. Diese Dichtung 50 dichtet sowohl das Filtergehäuse 18 als auch die Kondensatablaufkammer 32 nach außen ab.

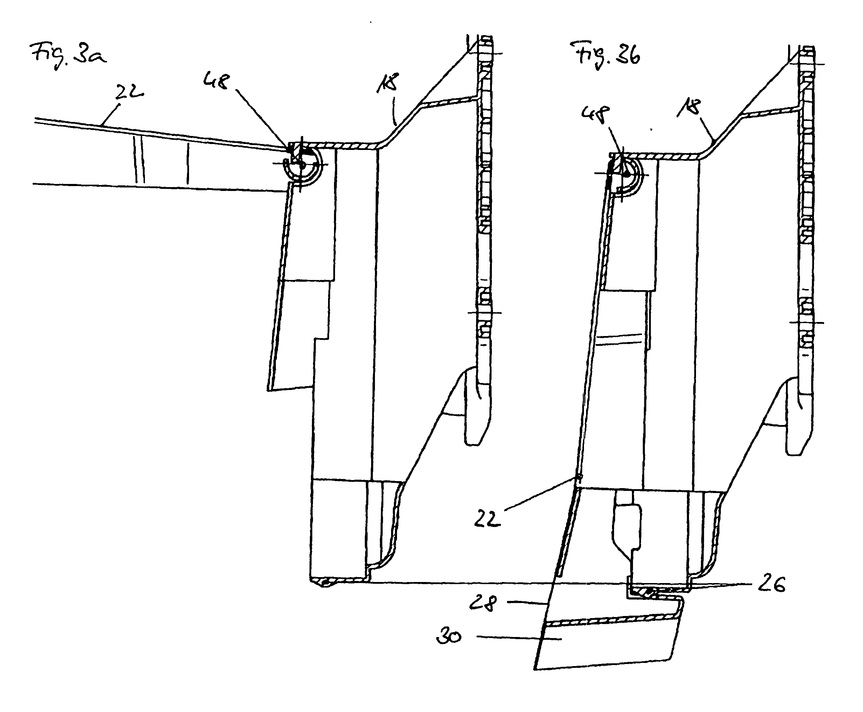

Figur 3a zeigt eine Schnittansicht eines erfindungsgemäßen Filtergehäuses 18 mit hochgeklapptem Deckel 22. Figur 3b zeigt eine Schnittansicht eines erfindungsgemäßen Filtergehäuses 18 mit geschlossenem Deckel 22. Im geschlossenen Zustand des Deckels 22 ist dieser über das Scharnier 48, welches die Schwenkachse für den Deckel 22 bildet, sowie über eine Rast- oder Schnappverbindung 26 mit dem Filtergehäuse 18 fest verbunden. Es ist beispielsweise denkbar, dass zwei Scharniere 48 oder ein einziges längliches Scharnier 48 vorgesehen sind bzw. ist. Ebenfalls sind unterschiedliche Ausgestaltungen der Rast- oder Schnappverbindung 26 denkbar, beispielsweise mehrere Nasen, die mit dem unteren Teil des Deckels 22 zusammenwirken, oder ein zu diesem Zweck ausgelegter länglicher Vorsprung. Der Deckel 22 hat eine Lufteintrittsöffnung 28. Unterhalb der Lufteintrittsöffnung 28 ist ein spoilerartiges Luftführungsmittel 30 vorgesehen, das das Einströmen von Luft begünstigt und somit die Luftansaugung der Klimaanlage unterstützt. Letztlich wird auf diese Weise die Funktion der Klimaanlage verbessert. Die Luftführungsmittel 30 dienen gleichzeitig als Griff zum Bedienen, das heißt insbesondere zum Öffnen des Deckels 22. Es ist eine robuste Konstruktion gegeben, so dass durch einfaches Ziehen an dem Deckel 22 im Bereich der Luftführungsmittel 30 ein Überwinden der Rast- oder Schnappverbindung 26 möglich ist, die zudem durch die spezielle Formgebung der Luftführungsmittel stabilisiert ist. Nach dem Öffnen des Deckels 22 lässt sich dieser im vorliegenden Beispiel um etwa 90° in etwa in die Horizontale schwenken. Spätestens bei vollständiger Schwenkung des Deckels 22 um 90° lässt sich der Deckel 22 aus dem Scharnier 48 abnehmen, so dass ein vollkommen ungehinderter Zugriff auf den Filtereinsatz 16 erfolgen kann. Zum Schließen des Deckels 22 wird dieser wieder in das Scharnier 48 beziehungsweise die Scharniere eingesetzt, nach unten geklappt und durch Druck in die Rast- oder Schnappverbindung eingeklinkt.

### Bezugszeichenliste

- 10: Klimaanlage
- 12: Frischluftzuführung
- 14: Frischluft
- 16: Filtereinsatz
- 18: Filtergehäuse
- 20: Öffnung
- 22: Deckel
- 24: Lufteintrittsfläche
- 26: Rast- oder Schnappverbindung
- 28: Lufteintrittsöffnung
- 30: Luftführungsmittel
- 32: Kondensatablaufkammer
- 34: Schlauch
- 36: Stutzen
- 38: Steg
- 40: gefilterte Luft
- 42: Kondensatablauf
- 44: LKW-Stirnwand
- 46: Halteschelle
- 48: Schwenkachse, Scharnier
- 50: Dichtung
- 110: Klimaanlage
- 112: Frischluftzuführung
- 114: Frischluft
- 116: Filtereinsatz
- 118: Filtergehäuse
- 124: Lufteintrittsfläche
- 134: Schlauch
- 140: gefilterte Luft
- 142: Kondensatablauf
- 144: LKW-Stirnwand
- 150: Dichtung
- 152: Gummitülle
- 154: Verschraubung
- 156: weitere Komponenten

## Patentansprüche

1. Vorrichtung zum Klimatisieren eines Kraftfahrzeugs mit
- einer Klimaanlage (10),
- einer Frischluftzuführung (12), durch die die Klimaanlage (10) mit Frischluft (14) versorgt wird,
- einem Luftfilter (16), der zugeführte Frischluft (14) filtert,
- einem Filtergehäuse (18) zur Aufnahme des Luftfilters (16),
- einer Öffnung (20) in dem Filtergehäuse (18) zum Einbringen beziehungsweise Entnehmen des Luftfilters (16) und
- einem abnehmbaren Deckel (22) zum Verschließen der Öffnung (20) in dem Filtergehäuse (18),
- wobei der Deckel (22) um eine Schwenkachse (48) schwenkbar ist und
- wobei der Deckel (22), ausgehend von seiner die Öffnung (20) verschließenden Position, während einer Schwenkbewegung beim Erreichen einer bestimmten Position abnehmbar ist,
**dadurch gekennzeichnet,**
- **dass** der Deckel (22) eine Lufteintrittsöffnung (28) aufweist, die an einer der Schwenkachse (48) abgewandten Seite des Deckels (22) angeordnet ist,
- **dass** im Bereich der Lufteintrittsöffnung (28) Luftführungsmittel (30) zum Führen von Luft in die Lufteintrittsöffnung (28) vorgesehen sind und
- **dass** die Luftführungsmittel (30) gleichzeitig als Griff zum Bedienen, insbesondere zum Öffnen beziehungsweise Schließen des Deckels (22) dienen.

2. Vorrichtung nach Anspruch 1, **dadurch gekennzeichnet, dass** die Einbauanlage des Luftfilters (16) so gewählt ist, dass eine Lufteintrittsfläche (24) im Wesentlichen vertikal angeordnet ist.

3. Vorrichtung nach Anspruch 1 oder 2, **dadurch gekennzeichnet, dass** der Deckel (22) in seiner die Öffnung (20) verschließenden Position im Wesentlichen parallel zu der Lufteintrittsfläche (24) des Luftfilters (16) angeordnet ist.

4. Vorrichtung nach einem der vorhergehenden Ansprüche, **dadurch gekennzeichnet,**
- **dass** der Deckel (22) um zirka 90° schwenkbar ist und
- **dass** der Deckel (22) spätestens in seiner vollständig ausgeschwenkten Position abnehmbar ist.

5. Vorrichtung nach einem der vorhergehenden Ansprüche, **dadurch gekennzeichnet,**
- **dass** der Deckel (22) mittels einer Rast- oder Schnappverbindung (26) an dem Filtergehäuse (18) zum Verschließen der Öffnung (20) einrasten kann und
- **dass** die Rast- oder Schnappverbindung (26) an der der Schwenkachse (48) abgewandten Seite des Deckels (22) angeordnet ist.

6. Vorrichtung nach einem der vorhergehenden Ansprüche, **dadurch gekennzeichnet, dass** einstückig mit dem Filtergehäuse (18) eine Kondensatablaufkammer (32) ausgebildet ist.

7. Vorrichtung nach Anspruch 6, **dadurch gekennzeichnet, dass** Mittel (34) zum Abführen von Kondensat aus der Kondensatablaufkammer (32) ohne weitere Hilfsmittel mit der Kondensatablaufkammer (32) verbindbar sind.

8. Vorrichtung nach Anspruch 7, **dadurch gekennzeichnet, dass** die Mittel zum Abführen von Kondensat als Schlauch (34) ausgebildet sind, der auf einen an der Kondensatablaufkammer (32) angeordneten Stutzen (36) aufsteckbar ist.

9. Vorrichtung nach Anspruch 7 oder 8, **dadurch gekennzeichnet, dass** in der Kondensatablaufkammer (32) ein Steg (38) vorgesehen ist, der einen Strömungsbereich des Kondensats unterteilt, so dass ein Belüftungsbereich zur Verfügung gestellt wird.

10. Vorrichtung nach einem der Ansprüche 6 bis 9, **dadurch gekennzeichnet,**
- **dass** das Filtergehäuse (18) an dem Kraftfahrzeug mit einer ersten Dichtung (50) abgedichtet ist,
- **dass** die Kondensatablaufkammer (32) an dem Kraftfahrzeug mit einer zweiten Dichtung (50) abgedichtet ist und
- **dass** die erste Dichtung (50) und die zweite Dichtung (50) einstückig ausgebildet sind.

11. Filtergehäuse (18), insbesondere Filtergehäuse (18) zur Verwendung mit einer Vorrichtung nach einem der vorhergehenden Ansprüche, zur Aufnahme eines Luftfilters (16), mit
- einer Öffnung (20) in dem Filtergehäuse (18) zum Einbringen beziehungsweise entnehmen des Luftfilters (16),
- einem abnehmbaren Deckel (22) zum Verschließen der Öffnung (20) in dem Filtergehäuse (18),
- wobei der Deckel (22) um eine Schwenkachse (48) schwenkbar ist und
- wobei der Deckel (22), ausgehend von seiner die Öffnung (20) verschließenden Position, während einer Schwenkbewegung beim Erreichen einer bestimmten Position abnehmbar ist,
**dadurch gekennzeichnet,**
- **dass** der Deckel (22) eine Lufteintrittsöffnung (28) aufweist, die an einer der Schwenkachse (48) abgewandten Seite des Deckels (22) angeordnet ist,
- **dass** im Bereich der Lufteintrittsöffnung (28) Luftführungsmittel (30) zum Führen von Luft in die Lufteintrittsöffnung (28) vorgesehen sind und
- **dass** die Luftführungsmittel (30) gleichzeitig als Griff zum Bedienen, insbesondere zum Öffnen beziehungsweise Schließen des Deckels (22) dienen.

## Claims

1. Air-conditioning device for a motor vehicle, comprising
- an air-conditioning system (10),
- a fresh air supply (12), through which the air-conditioning system (10) is supplied with fresh air (14),
- an air filter (16), which filters the fresh air (14) supplied,
- a filter casing (18) to accommodate the air filter (16),
- an opening (20) in the filter casing (18) for introducing or removing the air filter (16),
- a removable cover (22) for closing the opening (20) in the filter casing (18),
- it being possible for the cover (22) to be pivoted about a pivot axis (48),
- it being possible for the cover (22), starting from its position closing the opening (20), to be removed doing a pivoting movement when a specific position is reached,
**characterized**
- **in that** the cover (22) has an air inlet opening (28) which is arranged on a side of the cover (22) facing away from the pivot axis (48),
- **in that** air guide means (30) for guiding air into the air inlet opening (28) are provided in the region of the air inlet opening (28), and
- **in that** the air guide means (30) serve simultaneously as a handle for operating, in particular for opening and closing, the cover (22).

2. Device according to Claim 1, **characterized in that** the installation position of the air filter (16) is chosen such that an air inlet surface (24) is arranged substantially vertically.

3. Device according to Claim 1 or 2, **characterized in that**, in its position closing the opening (20), the cover (22) is arranged substantially parallel to the air inlet surface (24) of the air filter (16).

4. Device according to one of the preceding claims, **characterized**
- **in that** the cover (22) can be pivoted through about 90°, and
- **in that** the cover (22) can be removed at the latest in its fully pivoted-out position.

5. Device according to one of the preceding claims, **characterized**
- **in that** the cover (22) can latch in on the filter casing (18) by means of a latching or snap-action connection (26) in order to close the opening (20), and
- **in that** the latching or snap-action connection (26) is arranged on the side of the cover (22) facing away from the pivot axis (48).

6. Device according to one of the preceding claims, **characterized in that** a condensate outlet chamber (32) is formed in one piece with the filter casing (18).

7. Device according to Claim 6, **characterized in that** means (34) for discharging condensate from the condensate outlet chamber (32) without further aids can be connected to the condensate outlet chamber (32).

8. Device according to Claim 7, **characterized in that** the means for discharging condensate are formed as a hose (34), which can be plugged onto a connecting piece (36) arranged on the condensate outlet chamber (32).

9. Device according to Claim 7 or 8, **characterized in that** in the condensate outlet chamber (32) there is provided a web (38) which subdivides a flow region of the condensate, so that a ventilation region is made available.

10. Device according to one of Claims 6 to 9, **characterized**
- **in that** the filter casing (18) is sealed off on the motor vehicle by a first seal (50),
- **in that** the condensate outlet chamber (32) is sealed off on the vehicle by a second seal (50), and
- **in that** the first seal (50) and the second seal (50) are formed in one piece.

11. Filter casing (18), in particular filter casing (18) for use with a device according to one of the preceding claims, to accommodate an air filter (16), comprising
- an opening (20) in the filter casing (18) for introducing and removing the air filter (16),
- a removable cover (22) for closing the opening (20) in the filter casing (18),
- it being possible for the cover (22) to be pivoted about a pivot axis (48),
- it being possible for the cover (22), starting from its position closing the opening (20), to be removed doing a pivoting movement when a specific position is reached,
**characterized**
- **in that** the cover (22) has an air inlet opening (28) which is arranged on a side of the cover (22) facing away from the pivot axis (48),
- **in that** air guide means (30) for guiding air into the air inlet opening (28) are provided in the region of the air inlet opening (28), and
- **in that** the air guide means (30) serve simultaneously as a handle for operating, in particular for opening and closing, the cover (22).

## Revendications

1. Dispositif de climatisation d'un véhicule automobile, comprenant
- une installation de climatisation (10),
- une amenée (12) d'air frais par l'intermédiaire de laquelle l'installation de climatisation (10) est alimentée en air frais (14),
- un filtre à air (16) filtrant de l'air frais (14) délivré,
- un boîtier (18) de filtre, conçu pour recevoir ledit filtre à air (16),
- un orifice (20) pratiqué dans le boîtier (18) du filtre, pour permettre respectivement l'insertion ou la dépose du filtre à air (16), et
- un couvercle amovible (22) conçu pour obturer l'orifice (20) pratiqué dans le boîtier (18) du filtre,
- sachant que le couvercle (22) peut pivoter autour d'un axe de pivotement (48), et
- sachant que ledit couvercle (22) peut être déposé à partir de sa position obturant l'orifice (20), au cours d'un mouvement pivotant, lorsqu'est atteinte une position déterminée,
**caractérisé par le fait**
- **que** le couvercle (22) présente un orifice (28) d'entrée d'air, situé d'un côté du couvercle (22) qui est tourné à l'opposé de l'axe de pivotement (48) ;
- par le fait que des moyens (30) de guidage d'air sont prévus dans la région de l'orifice (28) d'entrée d'air, pour guider de l'air jusque dans ledit orifice (28) d'entrée d'air ; et
- par le fait que lesdits moyens (30) de guidage d'air remplissent simultanément la fonction d'une poignée assurant l'actionnement et en particulier, respectivement, l'ouverture ou la fermeture du couvercle (22).

2. Dispositif selon la revendication 1, **caractérisé par le fait que** la position d'intégration du filtre à air (16) est choisie de telle sorte qu'une surface (24) d'entrée d'air occupe une position sensiblement verticale.

3. Dispositif selon la revendication 1 ou 2, **caractérisé par le fait que**, dans sa position obturant l'orifice (20), le couvercle (22) est agencé pour l'essentiel parallèlement à la surface (24) d'entrée d'air du filtre à air (16).

4. Dispositif selon l'une des revendications précédentes, **caractérisé par le fait**
- **que** le couvercle (22) peut pivoter d'environ 90° ; et
- par le fait que ledit couvercle (22) peut être déposé, au plus tard, dans sa position totalement sortie par pivotement.

5. Dispositif selon l'une des revendications précédentes, **caractérisé par le fait**
- **que** le couvercle (22) peut s'encliqueter sur le boîtier (18) du filtre, au moyen d'une solidarisation (26) par crantage ou par déclic, en vue d'obturer l'orifice (20) ; et
- par le fait que ladite solidarisation (26) par crantage ou par déclic est située du côté du couvercle (22) qui est tourné à l'opposé de l'axe de pivotement (48).

6. Dispositif selon l'une des revendications précédentes, **caractérisé par le fait qu'**une chambre (32) d'évacuation de condensat est ménagée d'un seul tenant avec le boîtier (18) du filtre.

7. Dispositif selon la revendication 6, **caractérisé par le fait que** des moyens (34), destinés à l'écoulement du condensat hors de la chambre (32) d'évacuation dudit condensat, peuvent être reliés à ladite chambre d'évacuation (32) sans autres moyens auxiliaires.

8. Dispositif selon la revendication 7, **caractérisé par le fait que** les moyens, destinés à l'écoulement du condensat, sont réalisés sous la forme d'un flexible (34) pouvant être emboîté sur un embout (36) situé sur la chambre (32) d'évacuation dudit condensat.

9. Dispositif selon la revendication 7 ou 8, **caractérisé par le fait qu'**il est prévu, dans la chambre (32) d'évacuation du condensat, une membrure (38) scindant une zone d'écoulement dudit condensat, de manière à procurer une zone de ventilation.

10. Dispositif selon l'une des revendications 6 à 9, **caractérisé par le fait**
- **que** l'étanchéité du boîtier (18) du filtre, sur le véhicule automobile, est assurée par une première garniture d'étanchement (50) ;
- par le fait que l'étanchéité de la chambre (32) d'évacuation du condensat, sur ledit véhicule automobile, est assurée par une seconde garniture d'étanchement (50) ; et
- par le fait que la première garniture d'étanchement (50) et la seconde garniture d'étanchement (50) sont réalisées d'une seule pièce.

11. Boîtier (18) de filtre, notamment boîtier (18) de filtre conçu pour être utilisé avec un dispositif selon l'une des revendications précédentes, afin de recevoir un filtre à air (16), comprenant
- un orifice (20) pratiqué dans le boîtier (18) du filtre, pour permettre respectivement l'insertion ou la dépose du filtre à air (16),
- un couvercle amovible (22) conçu pour obturer l'orifice (20) pratiqué dans le boîtier (18) du filtre,
- sachant que le couvercle (22) peut pivoter autour d'un axe de pivotement (48), et
- sachant que ledit couvercle (22) peut être déposé à partir de sa position obturant l'orifice (20), au cours d'un mouvement pivotant, lorsqu'est atteinte une position déterminée,
**caractérisé par le fait**
- **que** le couvercle (22) présente un orifice (28) d'entrée d'air, situé d'un côté du couvercle (22) qui est tourné à l'opposé de l'axe de pivotement (48) ;
- par le fait que des moyens (30) de guidage d'air sont prévus dans la région de l'orifice (28) d'entrée d'air, pour guider de l'air jusque dans ledit orifice (28) d'entrée d'air ; et
- par le fait que lesdits moyens (30) de guidage d'air remplissent simultanément la fonction d'une poignée assurant l'actionnement et en particulier, respectivement, l'ouverture ou la fermeture du couvercle (22).
